# EUROPEAN PATENT SPECIFICATION

(11) **EP 3 107 143 B1**
(45) Date of publication and mention of the grant of the patent: **04.11.2020**
(21) Application number: 16174918.9
(22) Date of filing: 17.06.2016
(51) Int. Cl.: H01M 10/16, H01M 4/04, H01M 4/20, H01M 4/22, H01M 10/12, H01M 10/14, H01M 2/16

(54) **BI-FUNCTIONAL NONWOVEN MAT USED IN AGM LEAD-ACID BATTERIES**
NICHT GEWEBTE BI-FUNKTIONSMATTE FÜR BENUTZUNG IN AGM BLEI-SÄURE BATTERIEN
PAILLET NON TISSÉ BI-FONCTIONNEL UTILISÉ DANS DES BATTERIES AU PLOMB AGM

(30) Priority: 17.06.2015 US 201514742490
(43) Date of publication of application: 21.12.2016
(73) Proprietor: Johns Manville, Denver, CO 80202 (US)
(72) Inventor: GUO, Zhihua, Centennial, CO 80112 (US); SHARMA, Gautam, Cleveland, TN 37312 (US); NANDI, Souvik, Highlands Ranch, CO 80130 (US); ASRAR, Jawed, Englewood, CO 80111 (US); DIETZ III, Albert G., Davidson, NC 28036 (US)
(74) Representative: Dörr, Klaus

(56) References cited:
- EP-A1- 2 858 143
- US-A- 4 606 982
- US-A1- 2004 265 699

## Description

### TECHNICAL FIELD

The present technology relates to batteries and processes relating to batteries. More specifically, the present technology relates to processes and assemblies for improving uniformity in lead-acid batteries.

### BACKGROUND

Lead-acid batteries are an inexpensive, reliable, and rechargable storage medium for electric power. One area of continuing research is the materials used inside the battery. Most of them are exposed to the highly corrosive sulfuric acid that is used as the electrolyte in many lead-acid battery designs. The materials used in the positive and negative electrode assemblies, as well as the separator, are expected to maintain their structural integrity for years in this corrosive environment. They are also expected to be inexpensive and lightweight to keep the production costs down and energy-to-weight ratio up. Examples for lead-acid batteries and related components can be found in U.S. Patent No. 4,606,982 and U.S. Laid Open 2004/265699.

Uniformity within the battery assembly can have drastic effects on the performance and life cycle of a battery. Physical differences between components within the battery can cause performance effects that may produce weaknesses in components, and can eventually lead to defects and failure of the battery.

Thus, there is a need for improved systems and methods that can be used to produce more uniform battery components and batteries. These and other needs are addressed by the present technology.

### SUMMARY

The instant invention is directed towards a lead-acid battery as defined in claims 1 to 3 and a method for producing such lead-acid battery is defined in claims 4 to 13, further assemblies are described relating to batteries. The instant method of producing a battery includes positioning a first cell half including a first electrode within a battery casing as defined in the claims. The first cell half include a first electrode material and a first nonwoven material about or coupled with the first electrode as defined in the claims. The method also includes positioning a second cell half including a second electrode within the battery casing proximate to and in contact with the first cell half. The second cell half includes a second electrode material and a second nonwoven material about or coupled with the second electrode as defined in the claims.

The first nonwoven material may include two nonwoven sections located on opposing sides of the first electrode in embodiments, and in one embodiment the first nonwoven material and the second nonwoven material may be a similar material and may be of the same thickness. The method specifically does not include positioning a discrete separator between the first cell half and the second cell half in embodiments. Additionally, the first electrode material and the second electrode material may include a lead material or a lead oxide material. The nonwoven material may include glass microfibers characterized by a nominal diameter less than 5 µm, and the thickness of the nonwoven material or bi-functional mats may be between about 0.25mm (10 mils) and about 3.81mm (150 mils) under 10 kPa pressure.

In disclosed embodiments, the first nonwoven material and second nonwoven material are bi-functional mats each effectively include or be configured to operate as both a battery pasting paper and at least a portion of a battery separator, where the materials each include a continuous material from a first surface of the nonwoven in contact with the respective electrode to an exterior surface opposite the first surface. The method may also include saturating the first cell half and second cell half with an electrolyte material, and the battery produced may include an absorbed glass mat lead-acid battery.

The present technology also includes processes of manufacturing batteries that may include disposing an electrode grid on a first section of nonwoven material, and applying an active material on the electrode grid. The processes may also include disposing a second section of nonwoven material on the active material to form a composite, and may include compressing the composite to incorporate the active material within the first and second sections of nonwoven material. The first and second sections of nonwoven material may be in embodiments two separate nonwoven mats, and may also be two portions of a single mat, which may be extended about the grid and active material like an envelope. The active material may be incorporated into each of the nonwoven materials to a similar depth less than the full thickness of the nonwoven materials in embodiments as well. An electrode plate may be formed from the composite, and then the plate may be incorporated into a battery.

In embodiments the process may not include an operation of flash drying the composite before the electrode plate is formed. The active material may be incorporated to a depth of less than half the thickness of each of the nonwoven sections of material in embodiments, each section of nonwoven material may include a continuous material including glass fibers. Each section of nonwoven material may also be characterized by a thickness of greater than 0.51mm (20 mils) in embodiments and may be of a variety of dimensions useful in a battery.

The present technology includes lead-acid batteries that include a first electrode, a second electrode, and two bi-functional mats as defined in the claims. A first surface of each bi-functional mat is in contact with the first or second electrode, and a second surface opposite the first surface of each bi-functional mat is in contact with the other bi-functional mat. The batteries may also include an active material incorporated within each bi-functional mat and in contact with the first or second electrode. The active material does not fully extend through either bi-functional mat to contact the other bi-functional mat, and each bi-functional mat may include a nonwoven glass fiber mat. In disclosed embodiments, each bi-functional mat may be characterized by a thickness greater than about 0.25mm (10 mils).

Such technology may provide numerous benefits over conventional systems and techniques. For example, production costs may be reduced because certain process steps including flash drying may be avoided. An additional advantage is that improved uniformity of the internal components can create a more consistent operation and may thereby extend the life of the battery. These and other embodiments, along with many of their advantages and features, are described in more detail in conjunction with the below description and attached figures.

### BRIEF DESCRIPTION OF THE DRAWINGS

A further understanding of the nature and advantages of the disclosed technology may be realized by reference to the remaining portions of the specification and the drawings.
FIG. 1 shows an exploded perspective view of a battery cell assembly.
FIG. 2 shows a cross-sectional view of an exemplary battery cell assembly according to the present technology.
FIGS. 3A-3C show cross sectional views of various configurations of an electrode or plate including a nonwoven fiber mat according to the present technology.
FIG. 4 shows a process for preparing an electrode or plate having a nonwoven fiber mat disposed on or near a surface of the electrode or plate according to embodiments of the present technology.
FIG. 5 shows a method of producing a battery according to embodiments of the present technology.
FIG. 6 shows a process of manufacturing components for use in a battery according to embodiments of the present technology.

Certain figures are included as schematics. It is to be understood that the figures are for illustrative purposes, and are not to be considered of scale unless specifically stated to be as such.

In the appended figures, similar components and/or features may have the same reference label. Further, various components of the same type may be distinguished by following the reference label by a letter that distinguishes among the similar components. If only the first reference label is used in the specification, the description is applicable to any one of the similar components having the same first reference label irrespective of the letter.

### DETAILED DESCRIPTION

The instant invention is directed towards a lead-acid battery as defined in claims 1 to 3 and a method for producing such lead-acid battery is defined in claims 4 to 13, further assemblies, structures, and methods related to improving uniformity of components used in batteries are described. Absorbent glass mat (AGM) lead-acid batteries are a popular type of lead-acid battery because they can be much safer than flooded batteries, and are essentially maintenance free. While typical flooded lead-acid batteries may need additional water to be added to the cells due to evaporation, AGM batteries operate in a closed system in which the glass mat in the cell is saturated with electrolyte, e.g. sulfuric acid, and allows reduction/elimination of evaporation due to a closed system. These batteries can also be advantageous because the saturated mat can prevent the electrolyte from stratifying during discharge, which can cause increased erosion of the associated electrode areas through focused current flow.

Because AGM batteries are typically sealed after they are produced, and due to the corrosive materials used in the batteries, components within the battery cannot easily be replaced when they fail. Component failure can occur for any number of reasons including by defects produced by disuniformity of components. When components within a battery are not uniform, electrolyte flow and distribution may not be even, and this can cause a host of problems within a battery. For example, uneven electrolyte flow can cause uneven currents to flow through the battery and across the electrodes. Uneven currents can cause uneven use of the electrode surfaces, which can produce crystallization on the active material from overuse.

Crystals formed on the active material may produce shapes including needles that can penetrate a cell separator, for example, which can cause battery shorting. Additionally, resistance differences across a mat surface or between dissimilar materials may produce areas characterized by lower resistance. An area of lower resistance can produce higher currents and higher temperatures within the battery, which can further weaken materials. Accordingly, inconsistencies in materials used in AGM batteries can produce less uniform operation, which can eventually lead to battery failure.

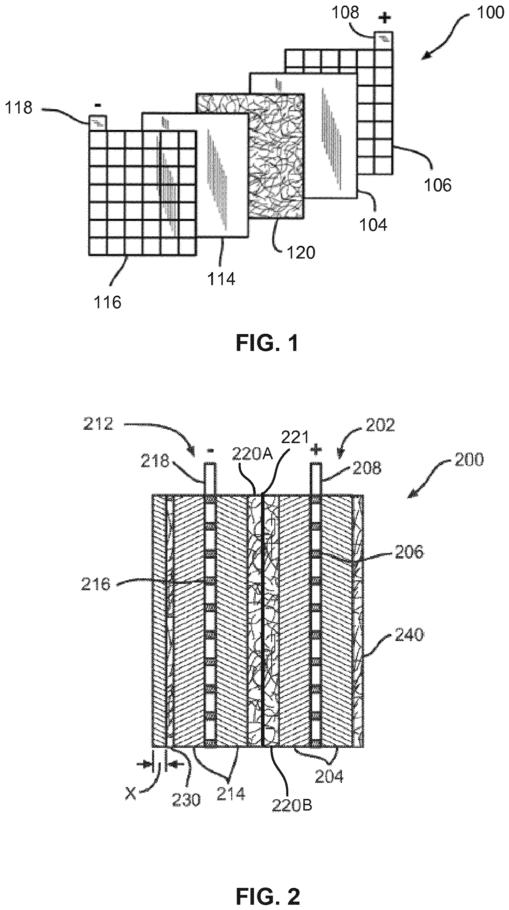

One type of disuniformity includes differences between pasting papers and separators. Such an issue can be explained with reference to **FIG. 1**. The figure illustrates an exploded view of general battery components of a battery cell 100. As shown, the system includes a positive and negative electrode that can include the shape of grids 106, 116 made of a variety of metals and alloys. The electrodes include positive and negative terminals 108, 118 by which electrical connections can be made. An active material 104, 114 is often coated or pasted on the grids 106, 116. For example, lead dioxide may be utilized as active material 104, while lead may be used as active material 114. When the materials are associated with an electrolyte such as sulfuric acid, a chemical reaction can cause work to be done on charge, which may produce a voltage sufficient for activities including, for example, starting a car. Additionally, by applying a voltage to the battery, the chemical reaction can be reversed, which allows the battery to be recharged.

To prevent short-circuiting of the cell, such as by shedding of the active material, a separator 120 is typically placed between the two electrodes 106, 116 to prevent physical contact between the electrodes, while allowing ionic transport to occur across it. A variety of properties of the separator may be adjusted to optimize battery performance, including, for example, thickness, porosity, pore size, resistivity, tensile strength, and weight, among many others.

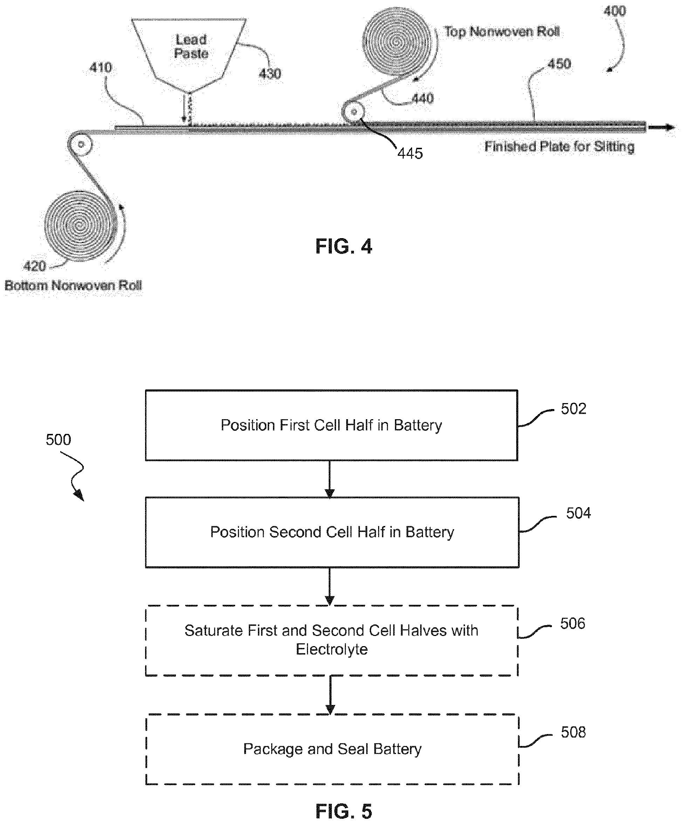

Moreover, the active material is often coupled with the grid via a pasting paper that helps to maintain the active material associated evenly with the electrode, and limit, for example, sagging within the battery. Such a production is also described below with reference to FIG. 4. Cellulose paper or microfiber mats are often used for this material, and in embodiments may be made of essentially glass microfibers alone. Cellulose paper, however, generally decomposes when in contact with the electrolyte, and thus mats of materials including glass fibers are often used as they may resist the acidity and not interfere with the chemical reactions. The separators may also be made of a glass fiber mat. In many conventional designs, the pasting paper and separators are both made of a glass microfiber composition, and may be designed to have similar properties. However, similar properties may still cause issues over time.

For example, the pasting paper used in such batteries is often relatively thin, such as from about 0.1mm - 0.23mm (4-9 mils) (0.004 to 0.009 inches). The separator, on the other hand, may be much thicker, such as from1.02-2.29mm (40-90 mils), or roughly five to ten times as thick as the pasting paper. Accordingly, even when the two components are made based on similar standards, such as porosity greater than 90% or a particular density, for example, there is a high likelihood if not an assurance of at least minute differences between the two components based simply on the much different thicknesses. Also, fibers with different size distribution or glass chemistry may be used for making the pasting paper and/or separator, or the separator and pasting paper may be supplied by different suppliers, using different raw materials and processes, which may further exacerbate these issues. These physical differences, including, for example, density, pore size, and distribution, will still cause differences in electrolyte distribution across the cell, which may still produce uneven currents on the electrodes, eventually producing issues such as those previously described. The present technology overcomes the even minute physical differences between the pasting paper and separator by combining the two into a single bi-functional mat associated with each electrode. This bi-functional component is explained in more detail below with regard to FIG. 2

**FIG. 2** illustrates a cross-sectional view of a battery cell 200 according to embodiments of the present technology. Cell 200 may include aspects of cell 100 previously described, and may be one of many cells included in a battery design according to embodiments of the present technology. Each cell 200 may provide an electromotive force (emf) of about 2.1 volts and a lead-acid battery may include 3 such cells 200 connected in series to provide an emf of about 6.3 volts, or may include 6 such cells 200 connected in series to provide an emf of about 12.6 volts, and the like. As illustrated, the cell 200 includes a first electrode 202, which may be a positive electrode, and a second electrode 212, which may be a negative electrode. Electrodes 202, 212 may include a positive 206 and negative 216 electrode grid with respective terminals 208, 218 to which electrical connections can be made. Against electrodes 206, 216 is active material 204, 214. These items together may compose half of a cell or a plate 202, 212 of the battery composite. Positive electrode 202 may include a positive active material 204, which may be lead dioxide in disclosed embodiments. The active material 204 may be pasted, applied, coupled with, or associated with the grid 206, which may provide structural support for the active material, or may include additional mats or material to maintain the active material uniformly against the electrode grid 206.

Similarly, negative electrode 212 may include a negative active material 214, which may include lead, which may be pasted, applied, coupled with, or associated with negative electrode grid 216. When the two electrodes 202, 212 are coupled and operated as a battery cell, an electrolyte (not shown) may allow a chemical reaction to occur at each electrode to generate energy for use from the battery. In conventional battery designs, in order to prevent short-circuiting of the cell, a separator material 220 is included between the two electrodes to prevent physical contact between the electrodes. However, as discussed above, such a separator material may affect the electrolyte flow, and uniformity of convection between the electrodes, which may affect the current and wear of the electrodes.

Additionally, as noted above, in order to prevent the active material from sagging, or flowing within the cell, additional reinforcements may be provided against the electrode grid to maintain a uniform contact and distribution of the active material 204, 214. For example, a mat of non-reactive material may be saturated with or include the active material and be coupled with the electrode grids. As mentioned previously, the mat is often termed "pasting paper," regardless of the actual composition, which may include a variety of materials. The present technology, however, avoids the inconsistencies between the pasting paper and the separator by combining the two materials into a single mat design on at least one side of each electrode.

As illustrated in the Figure, bi-functional mat 220B extends from electrode grid 206 past active material 204 on that side of the grid, and up to location 221 where it joins mat 220A of negative electrode 212. Bi-functional mat 220A similarly extends from negative electrode grid 216 past active material 214 to point 221 where it meets mat 220B. Additionally, based on the pore diameter, the amount of penetration of active material may be minimal or virtually not occur. In this case, for example, bi-functional mat 220A extends up to active material 214 about grid 212, without penetration or with minimal penetration into the material of the bi-functional mat. As such, the cell may include at least two bi-functional mats, with a first surface of each mat being in contact with the first or second electrode or electrode grid, and a second surface opposite the first surface of each mat being in contact with the other bi-functional mat. On the other sides of the two electrodes may be a similar bi-functional mat, or a mat of a different thickness including a reduced thickness from the bi-functional mats. Hence, disclosed embodiments include bi-functional mats incorporated in the cell between the two electrodes, with alternative material on the outside of each electrode, as well as bi-functional mats on each side of each electrode.

As will be described further below with respect to Fig. 4, for example, the active material 204, 214 may be incorporated within mats 220A, 220B to a controlled depth that may account for a partial thickness of the mats. The active material may be incorporated within each bi-functional mat and be in contact with or be configured to contact either of the first or second electrodes. In additional embodiments, the penetration may be minimal if at all. For example, as illustrated, bi-functional mat 220B associated with positive electrode 202 may include active material on the mat surface in contact with the grid 206 of the electrode 202. Also in embodiments the active material may not fully extend through either bi-functional mat to contact the other bi-functional mat. Because each bi-functional mat operates as both the pasting paper and the separator, a separation of the active material may allow the coupled cell to operate without short-circuit.

The bi-functional mats may include a variety of material designs, but may be of a continuous design from the electrode surface to which it is contacted across the entire mat, which may extend to a mid-point or central location of the cell between the two electrodes. It is to be understood that characteristics described may be average characteristics across the mat. Although a certain range of variation may be included within each bi-functional mat, the mats may include a continuous configuration of materials across the thickness of the mat. Mats 220A, 220B may be identical in formulation and characteristics, and may maintain such characteristics across the entire surface of each mat. For example, the mats may be of constant density, porosity, pore size, composition, and any of a number of other physical characteristics. In this way, the mats may promote a fully uniform electrolyte flow and distribution in contrast to conventional cells. As previously noted, even conventional cells in which the pasting paper and separator are designed with similar processes and designed to have similar characteristics, because of the significant difference in thickness between the paper and separator, there would still be minute but appreciable differences between the two mats. In the present design, however, there may be identical characteristics across the entirety of the bi-functional mat because the mat is a uniform design constructed as a single piece of material. This may promote uniform electrolyte flow, and therefore uniform current distribution and operation across the cell, which may provide uniform wear and associated improved life and/or operation of the battery.

Because each bi-functional mat 220A, 220B, which includes the active material, effectively includes a portion of the separator as well, the mats may be of a greater thickness than conventional pasting paper. As opposed to being of a thickness less than about 0.25mm (10 mils), the described bi-functional mats may include the thickness of the pasting paper and up to half or more of the thickness of the separator. Accordingly, the bi-functional mats may be characterized by a thickness greater than about 0.25mm (10 mils) in disclosed embodiments, and may include a thickness greater than or about 0.38mm (15 mils), 0.51mm (20 mils), 0.76mm (30 mils), 1.02mm (40 mils), 1.27mm (50 mils), etc. or more, and may also include a thickness less than or about 3.81mm (150 mils), 3.3mm (130 mils), 2.92mm (115 mils), 2.54mm (100 mils), 2.29mm (90 mils), 2.03mm (80 mils), etc. or less.

The bi-functional mats may include a variety of materials, and in disclosed embodiments may include glass fibers, and may for example be nonwoven mats including glass fibers. The mat may be of a variety of thicknesses as discussed above, typically greater than or at least about 0.25mm - 0.51mm (10-20 mils) based on the fibers used and various characteristics of the incorporated material. The mat thickness may also be a function of the pressure under which it is formed or held within a battery, such as under a compressive force of, for example, 10 kPa. The area weight of the glass mat in the separator 220 generally ranges from 100 and 400 g/m², such as, for example, 150 and 300 g/m². The binder content (LOI) may be in a range of values to provide additional effects on the mat thickness, for example. The binder content of the nonwoven materials is between about 5 wt.% and 45 wt.%. All weight percent given for binder, preferably acid resistant polymer, refer to a cured binder in the final mat and are based on the total weight of the nonwoven mat.

The bi-functional mat used in the cells may be sufficiently electrically insulating to prevent significant electron conductance between the positive and negative electrode assemblies 202 and 212. Electrical resistivity on the order of about 1MΩ per square or more is usually sufficient. While the bi-functional mats 220 are electrically insulating, it should also be conductive to the ions in the electrolyte, such as SO₄²⁻ ions that may form the complementary ionic current to the electric current traveling between the positive and negative electrode assemblies 202 and 212. The bi-functional glass mat used may be porous to permit this ionic migration, and can have a porosity of 50% to 99%, and in embodiments are characterized by a porosity of greater than 90%. Additionally, the bi-functional mat may have an absorption height of at least 5 cm, at least 10 cm, or more conducted according to the ISO 8787 standard. In exemplary bi-functional mats 220, the average pore diameter of the ion channels formed in the separator 220 can range from 5 µm or less to 100 µm or more. Additionally, the bi-functional mat may include or be characterized by any material characteristic of standard AGM separators. This includes, but is not limited to compressibility, electrical resistivity, pore characteristics, surface area, tensile elongation and strength, porosity, etc. By maintaining some or certain characteristics similar to more conventional separators, the present bi-functional mats may be used in a wide variety of battery applications and designs.

In some examples, the glass-fiber mats may be blended with non-glass fibers, such as fibers made from organic polymers and fibers made from graphite, among others. Exemplary organic polymer fibers may include polyolefin fibers and polyester fibers, among others including other synthetic fibers. Specific examples include polyethylene terephthalate (PET) fibers, polybutylene terephthalate (PBT) fibers, polyethylene (PE) fibers, polypropylene (PP) fibers, and poly(p-phenylene sulfide) (PPS) fibers, among others. Fibers made from these materials have comparable electrical conductivity to glass fibers. Additionally, the bi-functional mats may include additives and additional materials to affect particular characteristics of design.

FIG. 2 further shows additional reinforcement mats that may optionally be incorporated into cell 200. For example, reinforcement mat 230 may be positioned near a surface of negative electrode assembly 212, and reinforcement mat 240 may be positioned near the surface of positive electrode assembly 202. The reinforcement mat 230 may be a nonwoven fiber mat disposed partially or fully over the surface of negative electrode assembly 212 so as to partially or fully cover the surface. In disclosed embodiments, the reinforcement mat is an additional bi-functional mat. For example, as described below, depending on the plate location in the cell mat 230 and/or 240 may be either a reinforcement mat or bi-functional mat. Additionally, a conventional pasting mat may further be included in the design, however, because of the bi-functional mat, such a pasting mat may not be needed. Accordingly, the reinforcement mat 230 may be disposed on both surfaces of the negative electrode assembly 212, or may fully envelope or surround the electrode. Reinforcement mat 230, or additional bi-functional mat 230, may reinforce the negative electrode assembly 212 by providing additional support for the negative active material 214. The additional support provided by reinforcement mat 230 may help reduce the negative effects of shedding of the negative active material particles as the active material layer softens from repeated charge and discharge cycles. This may reduce the degradation commonly experienced by repeated usage of lead-acid batteries. Additional embodiments may include a reinforcement mat on the exterior side of each electrode while including a bi-functional mat on the interior of each electrode in contact with the bi-functional mat on the interior of the opposite electrode.

Battery design may include a number of electrode plates per cell, and may include a number or plurality of cells in the entire battery casing. Depending on the location of the electrode plate or cell, each mat utilized per electrode plate may be bi-functional mats. For example, interior plates in a battery may not require additional reinforcement means such as mats or separators. Accordingly, for such interior plates all mats surrounding the electrodes may include bi-functional mats of the present technology. For example, reviewing FIG. 2 for an interior cell, the cell may include plate 212, or the negative electrode assembly including grid 218 and active material 214, and the cell may include plate 202, or the positive electrode assembly including grid 208 and active material 204. It is to understood that FIG. 2 is not necessarily illustrated to scale, where the thickness of active material 204, 214 may be less than, equal to, or greater than the thickness of mats 220, 230, 240 in embodiments. Because additional reinforcement may not be necessary for the interior cell, each mat about electrodes 212, 202 may be a bi-functional mat. For example, negative electrode 212 may include a first bi-functional mat 220A, and a second bi-functional mat 230 placed on opposing sides of the electrode. Similarly, positive electrode 202 may include a first bi-functional mat 220B and a second bi-functional mat 240 placed on opposing sides of the electrode. The bi-functional mats may be identical in embodiments. In embodiments, the bi-functional mats may also include sections of a single mat. For example, a bi-functional mat, including a first section 220A and a second section 230 may be placed about electrode assembly 212, such as to envelope the electrode. A similar operation may be performed on the positive electrode. It is to be understood that these and alternative configurations are all encompassed by the present technology. For example, on one end of the battery design, a reinforcement mat 230 may be included. However, for that particular cell, mat 240 may include a bi-functional mat on the opposite side of the cell, and vice versa.

Reinforcement mat 230, or additional bi-functional mat 230, may or may not be impregnated or saturated with the negative active material 214 so that the reinforcement mat 230 is partially or fully disposed within the active material 214 layer. Impregnation or saturation of the active material within the reinforcement mat means that the active material penetrates at least partially into the mat. For example, reinforcement mat 230 may be fully impregnated with the negative active material 214 so that reinforcement mat 230 is fully buried within the negative active material 214, i.e., fully buried within the lead paste. Fully burying the reinforcement mat 230 within the negative active material 214 means that the mat is entirely disposed within the negative active material 214.

In examples, each of the reinforcement mats 230, 240, which may be bi-functional mats in embodiments or in specific locations in the cell as explained above, as well as bi-functional mats 220A, 220B may be disposed within the active material 204, 214 up to about a depth "X" of about 0.51mm (20 mils) from an outer surface of the electrodes 202, 212. In other examples, the bi-functional mats 220A, 220B, 230, 240 may rest atop the active material 204, 214 so that the mat is impregnated with very little active material or virtually none at all. Accordingly, in disclosed embodiments, the active material may be incorporated from a depth of 0 (or no incorporation) up to the full depth of the mat, or any range in between.

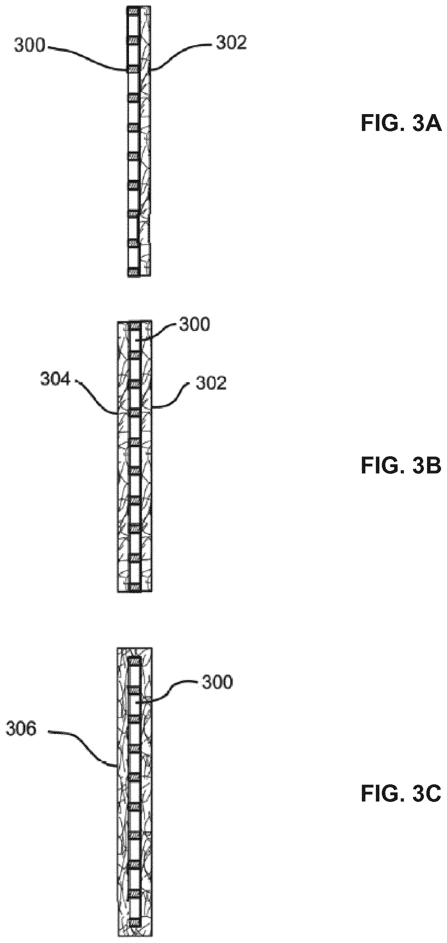

Referring now to **FIGS. 3A-3C****,** illustrated are various electrode-glass mat configurations, which may be or include the bi-functional mats previously described. FIG. 3A illustrates a configuration where an electrode 300 has a single glass mat 302 disposed on or near an inner surface. This configuration may be similar to that described above for FIG. 2 for either of the bi-functional mat components. The glass mat 302 may partially or fully cover the outer surface of electrode 300. The configuration of FIG. 3B is similar to that of FIG. 3A except that an additional glass mat 304 is disposed on or near an opposite surface of electrode 300 so that electrode 300 is sandwiched between the two glass mats, 302 and 304. Like glass mat 302, mat 304 may partially or fully cover the opposite surface of electrode 300. Mat 304 may be an additional bi-functional mat in embodiments and may also be a different mat including a reinforcement mat or additional material structure. FIG. 3C illustrates a configuration where a glass mat 306 fully envelopes or surrounds electrode 300. Glass mat 306 may function similar to a bag formation in which electrode 300 is placed.

**FIG. 4** illustrates a simplified schematic of a manufacturing system 400 for making an electrode assembly with the present bi-functional mats, which can be used in lead-acid battery cells, including AGM batteries. The system 400 includes a conveyor belt to transport a grid 410, which may be or include a lead and/or lead alloy, toward an active material applicator 430. Applicator 430 may dispose, paste, apply, or provide, for example, lead or lead oxide paste on to grid 410. A bi-functional mat roll 420 may be positioned below the grid 410 so that it is applied to a bottom surface of the grid 410. A second bi-functional nonwoven mat roll 440 may be positioned above grid 410 so that a bi-functional mat is applied to a top surface of the grid 410. An additional element may be utilized to compress the formed composite, or such an activity may be performed by roller 445 applying bi-functional mat material 440.

The resulting electrode assembly 450 may subsequently be cut or slit to length via a plate cutter (not shown). As described previously, the active material 430 may be applied to the grid 410 and/or top and bottom of reinforcement mats formed from rolls 440 and 420, so that the active material impregnates or saturates the mats to a desired degree. By controlling certain of the paste characteristics including density, flow characteristics, etc., the degree to which the paste is incorporated or impregnated into the bi-functional mat can be controlled.

The mixing, adding, and/or drying or curing operations performed by manufacturing system 400 may be continuous processes instead of batch or semi-batch processes. When run as continuous processes, the manufacturing system 400 may be run continuously, for a faster throughput and more cost effective operation. As explained previously, for an end plate within a battery, only a single bi-functional mat may be used, and either roll 420 or 440 may include a reinforcement mat that is utilized to add additional structural integrity to the battery cells on the side of the plate that is proximate the battery casing.

In conventional battery designs, one or more of the nonwoven materials may include a pasting paper that is to be fully saturated with the active material. Because bleeding of the active material occurs, a flash drying operation is often performed so that the slit plates do not stick to one another to form a block when stacked after cutting. However, by utilizing the bi-functional mat or the present technology that does not impregnate the active material through the entire thickness of the mat, the flash drying operation may be avoided or completely removed from the process. Accordingly, a faster and more cost effective process for making the electrode assemblies may be afforded by the present technology.

Referring now to **FIG. 5**, a flowchart is shown highlighting selected steps in a method 500 of producing a battery or a cell within a battery, which may include a lead-acid battery. Plates or electrode assemblies as discussed previously may have been formed, and a battery or cell may be produced with the plates. The methods may include positioning a first cell half including a first electrode in a battery casing at operation 502. The cell half may include a positive or negative electrode assembly utilizing one or more bi-functional mats as previously described, and for example, the first cell half may include the negative electrode. For example, the cell half may include bi-functional or reinforcement mat 230, grid 216, active material or first electrode material 214 and bi-functional or first nonwoven material mat 220A coupled with the first electrode, which forms one half of the battery cell 200 discussed previously. As explained elsewhere, whether the plate is intended as an end plate or interior or middle plate may determine whether a reinforcement mat or bi-functional mat is applied on one side of the electrode assembly. For example, for an interior cell two bi-functional mats, or two portions of a single bi-functional mat may comprises both mats 230 and 220A, while on an end plate a reinforcement mat may be used as mat 230 proximate the battery casing. The cell half may be positioned in a battery among other components or placed directly in the casing alone.

The method may also include positioning a second cell half including a second electrode within the battery at operation 504. The second cell half may be positioned within the battery casing proximate to and in contact with the first cell half. As illustrated in an exemplary configuration in FIG. 2, the second cell half may include the positive or negative electrode assembly, and may include the positive electrode assembly including bi-functional mat 220B if the first cell half utilizes a negative electrode. In embodiments, the electrodes may be reversed with the first cell half utilizing the positive electrode, and the second cell half utilizing the negative electrode. The second cell half may include a second electrode material or active material, and a second nonwoven material or bi-functional mat coupled with the second electrode. As illustrated in an exemplary embodiment in FIG. 2, the second electrode assembly or cell half may be positioned within the casing so that the two half cells contact one another along the bi-functional mats illustrated by line 221. In embodiments either of the bi-functional mats or nonwoven materials may include two nonwoven sections located on opposing sides of the electrode grid, or the bi-functional material may be included on one side of the electrode grid, while an additional bi-functional mat or nonwoven material is included on the other side of the electrode. For example, an additional reinforcement mat 240 may be included on the plate proximate the battery casing on an opposite side of the battery.

The nonwoven materials or bi-functional mats may include similar materials, and may be identical, substantially similar, or relatively similar to one another. For example, the nonwoven materials may be of the same thickness, density, porosity, pore size, etc. among other physical characteristics. Because the two cell halves include the bi-functional mats, the method may specifically not include positioning a discrete separator between the first cell half and the second cell half. Conventional battery designs include placing a separator in between the first electrode plate and the second electrode plate in order to prevent material contact between the electrodes. However, the present designs effectively divide the separator between the two bi-functional mats, and thus obviate the need for a discrete separator. In this way, the present technology can produce batteries more efficiently by reducing the number of discrete parts included in each battery, which can reduce costs and increase overall manufacturing speed.

Within the cell halves, the first electrode material and the second electrode material may include a lead material or a lead oxide material. The nonwoven materials may include glass microfibers or any of the compositions previously described, and microfibers used may be characterized by a nominal diameter less than 5 µm. The thickness of either or both nonwoven materials or bi-functional mats may be between about 0.25mm (10 mils) and about 3.81mm (150 mils) under 10 kPa pressure. As previously described, the bi-functional mats, or the first nonwoven and second nonwoven materials may each effectively include the material used for both the battery pasting paper and at least a portion of the battery separator. However, unlike the separate components of conventional designs, in the present technology the mats each may be a continuous material across the bi-functional mat and include an average uniform composition, within a certain range for each characteristic of the mat, for the bi-functional mat material from a first surface of the nonwoven or bi-functional mat in contact with the respective electrode to an exterior surface opposite the first surface of each mat.

Method 500 may also include saturating at least a portion of the first cell half and the second cell half with an electrolyte material at optional operation 506, also known as "acid filling," which may be performed under pressure. The electrolyte may be any material known or developed and capable of functioning in a lead-acid-style battery. The electrolyte may include sulfuric acid, for example, and may be in various forms including a liquid or gel. Further operations may be performed including electrically coupling multiple cells together, reinforcing, packaging, and sealing the battery at optional operation 508. The cells may be incorporated in a variety of ways, and in one non-limiting example, multiple plate sets, with each set including a positive and a negative plate, may be utilized to form a cell. Moreover, multiple cells may be included and electrically coupled within a casing to form a battery. The battery produced may be any type of battery that may benefit from the bi-functional mat of the present technology, and may include an absorbed glass mat, lead-acid battery in embodiments.

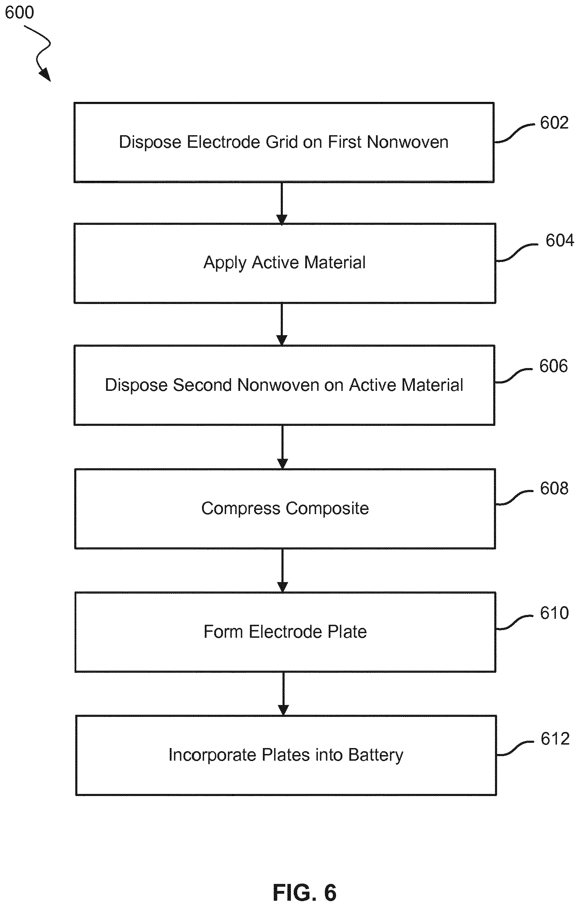

**FIG. 6** illustrates selected steps in a process 600 of manufacturing a battery according to the present technology. The process may include operations discussed in FIG. 4, and may produce a battery including some or all components such as those discussed previously. The method may include positioning an electrode grid or conductive material on a first section of nonwoven material at operation 602. The nonwoven material may be or include a bi-functional mat as previously described, or may include an alternative material including another nonwoven glass fiber mat, such as a reinforcement mat for an end plate of the battery. An active material may be applied to the electrode grid and/or nonwoven material at operation 604, which may be flowed onto the grid from a slurry, and a second section of nonwoven material may be positioned or placed on the active material to form a composite at operation 606. This composite may include a first half cell of a battery as previously described, and the second section of nonwoven material may include a bi-functional mat.

The composite may be compressed at operation 608 to produce a particular density or configuration of the composite, as well as to incorporate the active material into each of the nonwoven materials to a similar depth less than the full thickness of the nonwoven materials. An electrode plate may be formed from the composite at operation 610, which may include cutting a length of composite material to the dimension utilized for the battery. In a continuous operation, for example, plates may be cut from the composite as they travel down a manufacturing line. The plate may then be incorporated within a battery at operation 612 as part of a process to form the battery. Incorporation of the plates may include interior plates that include bi-functional mats on either side of the electrode assembly as well as end plates that may include at least one reinforcement mat on at least one side of the electrode to be proximate the battery casing.

Additional plates may be included such as previously described, and may be included as component halves of a cell that does not require a separator to be disposed between the electrode plate sections. The method may not include a flash drying operation before the electrode plate is formed because bleed through of the active material may be prevented based on active material being incorporated to a depth less than the total thickness of the bi-functional mat. For example, the active material may be incorporated to a depth of less than half the thickness of one or each of the nonwoven sections of material in embodiments. In additional embodiments, drying, curing, or other operations may be included for a variety of purposes.

One or each section of nonwoven material may include a continuous material including glass fibers such as previously described, and one or each section of the nonwoven material or bi-functional mat may be characterized by a thickness of greater than about 0.51mm (20 mils). In embodiments the thickness may be within any of the ranges previously described throughout the application. These processes and configurations may have several advantages over conventional designs including improved and more uniform current flow through the cell due to uniformity of the material in the bi-functional mats. Additionally, a variety of process steps may be obviated by the present technology in that flash drying and inclusion of discrete separators may not be used in batteries according to the present technology.

In the preceding description, for the purposes of explanation, numerous details have been set forth in order to provide an understanding of various embodiments of the present technology. It will be apparent to one skilled in the art, however, that certain embodiments may be practiced without some of these details, or with additional details.

Where a range of values is provided, it is understood that each intervening value, to the smallest fraction of the unit of the lower limit, unless the context clearly dictates otherwise, between the upper and lower limits of that range is also specifically disclosed. Any narrower range between any stated values or unstated intervening values in a stated range and any other stated or intervening value in that stated range is encompassed. The upper and lower limits of those smaller ranges may independently be included or excluded in the range, and each range where either, neither, or both limits are included in the smaller ranges is also encompassed within the technology, subject to any specifically excluded limit in the stated range. Where the stated range includes one or both of the limits, ranges excluding either or both of those included limits are also included.

As used herein and in the appended claims, the singular forms "a", "an", and "the" include plural references unless the context clearly dictates otherwise. Thus, for example, reference to "an electrode" includes a plurality of such electrodes, and reference to "the layer" includes reference to one or more layers and equivalents thereof known to those skilled in the art, and so forth.

Also, the words "comprise(s)", "comprising", "contain(s)", "containing", "include(s)", and "including", when used in this specification and in the following claims, are intended to specify the presence of stated features, integers, components, or operations, but they do not preclude the presence or addition of one or more other features, integers, components, operations, acts, or groups.

General Methods:
For the acid resistance the test procedure is described in BCIS-03B (Chapter 23) Rev. MAR-2010 of BCI Battery Technical Manual published by Battery Council International. Sulfuric acid (specific gravity 1.280+/-0.002 at 25°C) is used; soaking in this boiling acid for 3hrs. The aforementioned specific gravity of 1.28 at 25°C corresponds to about 38 wt.% at 25°C).Acid resistance means that 5% by weight or less of the binder disappears or dissolved in such test.

The absorption height is determined in accordance with ISO 8787:1986 ("Paper and board - Determination of capillary rise - Klemm method" (1986-08-28). In ISO 8787:1986, only water is used and in the instant measurement a sulfuric acid (specific gravity 1.280+/- 0.002 at 25°C) is used instead of water. After 10 minutes of exposure the wick height is determined.

Thickness was measured using the BCI method. Mat thickness: it is measured by a micrometer under a specific pressure. Its test procedure is described in BCIS-03A (Chapter 10) Rev. Sept09 of BCI Battery Technical Manual published by Battery Council International. A pressure of 10KPa is used. Different pressures (e.g., 2KPa, 20KPa) might be used as well.

The test procedure for determining porosity, i.e. volume porosity is described in BCIS-03A (Chapter 11) Rev. Sept09 of BCI Battery Technical Manual published by Battery Council International.

The electromotive force (emf), such as the potential/voltage of the battery in the instant application, is measured by a voltage meter.

Electrical resistivity: ASTM Standard D 257-99. Standard test methods for D-C resistance or conductance of insulating materials, 1999. In the instant case, it is the surface resistivity.

Average pore diameter: Its test procedure is described in BCIS-03A (Chapter 6) Rev. Sept09 of BCI Battery Technical Manual published by Battery Council International.

LOI (loss on ignition) is determined according to ASTM D7348 - 13.Standard Test Methods for Loss on Ignition (LOI) of Solid Combustion Residues, ASTM International, West Conshohocken, PA, 2013, www.astm.org

## Claims

1. A lead-acid battery comprising:
(i) a first electrode;
(ii) a second electrode; and
(iii) two bi-functional mats,
wherein a first surface of each bi-functional mat is in direct contact with the first or second electrode, and wherein a second surface opposite the first surface of each bi-functional mat is in direct contact with the other bi-functional mat and the binder content of the nonwoven materials being the bi-functional mat is between 5 wt.% and 45 wt.% determined by ASTM D7348-13, further comprising an active material incorporated within each bi-functional mat and in contact with a grid of the first or second electrode and no discrete separator is positioned between the two bi-functional mats and each bi-functional mat is **characterized by** a thickness greater than 0.38mm (15 mils), the active material does not fully extend through either bi-functional mat to contact the other bi-functional mat.

2. The lead-acid battery as claimed in claim 1, wherein each bi-functional mat comprises a continuous glass fiber mat.

3. The lead-acid battery as claimed in one or more of claims 1 or 2, wherein each bi-functional mat is **characterized by** a thickness greater than 0.51mm (20 mils).

4. A method of producing a battery cell as claimed in one or more of claims 1 to 3, the method comprising:
(i) positioning a first cell half including a first electrode within a battery casing, the first cell half comprising a first electrode material and a first nonwoven material being a bi-functional mat and coupled with a first electrode grid; and
(ii) positioning a second cell half including a second electrode within the battery casing proximate to and in contact with the first cell half, the second cell half comprising a second electrode material and a second nonwoven material being a bi-functional mat and coupled with a second electrode grid,
wherein the first nonwoven material extends from its first surface proximate the first electrode to a second surface opposite the first that is proximate the second nonwoven material and the binder content of the nonwoven materials is between 5 wt. % and 45 wt.% determined by ASTM D7348-13, further comprising an active material incorporated within each bi-functional mat and in contact with a grid of the first or second electrode and the active material does not fully extend through either bi-functional mat to contact the other bi-functional mat and each bi-functional mat is **characterized by** a thickness greater than 0.38mm (15 mils), said method does not include positioning a discrete separator between the first cell half and the second cell half.

5. The method as claimed in claim 4, wherein the first nonwoven material comprises two nonwoven sections located on opposing sides of the first electrode.

6. The method as claimed in claim 4, wherein the first nonwoven material and the second nonwoven material are of the same thickness.

7. The method as claimed in one or more of claims 4 to 6, wherein the first electrode material and the second electrode material comprises a lead material or a lead oxide material.

8. The method as claimed in one or more of claims 4 to 7, wherein the thickness of the first nonwoven material is between 0.51mm (20 mils) and 3.81mm (150 mils) under 10 kPa pressure.

9. The method as claimed in one or more of claims 4 to 8, wherein the first electrode comprises a positive electrode, and the second electrode comprises a negative electrode.

10. The method as claimed in one or more of claims 4 to 9, wherein the first nonwoven material and second nonwoven material each comprise both a battery pasting paper and at least a portion of a battery separator, and wherein the materials each comprise a continuous material from the first surface of the nonwoven in contact with the respective electrode to an exterior surface opposite the first surface.

11. The method as claimed in one or more of claims 4 to 10, wherein the method further comprises saturating the first cell half and second cell half with an electrolyte material.

12. The method as claimed in one or more of claims 4 to 11, wherein the first and second nonwoven materials comprise a porosity greater than 90% and include an absorption height of at least 5 cm according to ISO 8787 standards.

13. The method as claimed in one or more of claims 4 to 12, wherein the battery comprises an absorbed glass mat lead-acid battery.

## Patentansprüche

1. Blei-Säure-Batterie, umfassend:
(i) eine erste Elektrode;
(ii) eine zweite Elektrode; und
(iii) zwei bifunktionelle Matten,
wobei eine erste Oberfläche jeder bifunktionellen Matte in direktem Kontakt mit der ersten oder zweiten Elektrode steht und wobei eine zweite Oberfläche gegenüber der ersten Oberfläche jeder bifunktionellen Matte in direktem Kontakt mit der anderen bifunktionellen Matte steht und wobei der Bindemittelgehalt der Vliesmaterialien, um die es sich bei der bifunktionellen Matte handelt, bei Bestimmung gemäß ASTM D7348-13 zwischen 5 Gew.-% und 45 Gew.-% liegt, ferner umfassend ein aktives Material, das in jede bifunktionelle Matte eingearbeitet ist und in Kontakt mit einem Gitter der ersten oder zweiten Elektrode in Kontakt steht, und wobei zwischen den beiden bifunktionellen Matten kein diskreter Separator angeordnet ist und jede bifunktionelle Matte durch eine Dicke von mehr als 0,38 mm (15 mil) gekennzeichnet ist, wobei das aktive Material sich nicht vollständig durch eine der bifunktionellen Matten erstreckt, um die andere bifunktionelle Matte zu berühren.

2. Blei-Säure-Batterie nach Anspruch 1, wobei jede bifunktionelle Matte eine durchgehende Glasfasermatte umfasst.

3. Blei-Säure-Batterie nach einem oder mehreren der Ansprüche 1 oder 2, wobei jede bifunktionelle Matte durch eine Dicke von mehr als 0,51 mm (20 mil) gekennzeichnet ist.

4. Verfahren zum Herstellen einer Batteriezelle nach einem der mehreren der Ansprüche 1 bis 3, wobei das Verfahren umfasst:
(i) Positionieren einer ersten Zellenhälfte mit einer ersten Elektrode innerhalb eines Batteriegehäuses, wobei die erste Zellenhälfte ein erstes Elektrodenmaterial und ein erstes Vliesmaterial umfasst, bei dem es sich um eine bifunktionelle Matte handelt und das mit einem ersten Elektrodengitter verbunden ist; und
(ii) Positionieren einer zweiten Zellenhälfte mit einer zweiten Elektrode innerhalb des Batteriegehäuses in der Nähe und in Kontakt mit der ersten Zellenhälfte, wobei die zweite Zellenhälfte ein zweites Elektrodenmaterial und ein zweites Vliesmaterial umfasst, bei dem es sich um eine bifunktionelle Matte handelt und das mit einem zweiten Elektrodengitter verbunden ist;
wobei sich das erste Vliesmaterial von seiner ersten Oberfläche in der Nähe der ersten Elektrode zu einer zweiten Oberfläche gegenüber der ersten erstreckt, die sich in der Nähe des zweiten Vliesmaterials befindet, und wobei der Bindemittelgehalt der Vliesmaterialien bei Bestimmung gemäß ASTM D7348-13 zwischen 5 Gew.-% und 45 Gew.-% liegt, ferner umfassend ein aktives Material, das in jede bifunktionelle Matte eingearbeitet ist und in Kontakt mit einem Gitter der ersten oder zweiten Elektrode in Kontakt steht, und wobei sich das aktive Material nicht vollständig durch eine der bifunktionellen Matten erstreckt, um die andere bifunktionelle Matte zu berühren, und wobei jede bifunktionelle Matte durch eine Dicke von mehr als 0,38 mm (15 mil) gekennzeichnet ist, wobei das Verfahren nicht das Anordnung eines diskreten Separators zwischen der ersten Zellenhälfte und der zweiten Zellenhälfte umfasst.

5. Verfahren nach Anspruch 4, wobei das erste Vliesmaterial zwei Vliesabschnitte umfasst, die an gegenüberliegenden Seiten der ersten Elektrode angeordnet sind.

6. Verfahren nach Anspruch 4, wobei das erste Vliesmaterial und das zweite Vliesmaterial dieselbe Dicke aufweisen.

7. Verfahren nach einem oder mehreren der Ansprüche 4 bis 6, wobei das erste Elektrodenmaterial und das zweite Elektrodenmaterial ein Bleimaterial oder ein Bleioxidmaterial umfasst.

8. Verfahren nach einem oder mehreren der Ansprüche 4 bis 7, wobei die Dicke des ersten Vliesmaterials unter einem Druck von 10 kPa zwischen 0,51 mm (20 mil) und 3,81 mm (150 mil) beträgt.

9. Verfahren nach einem oder mehreren der Ansprüche 4 bis 8, wobei das erste Elektrodenmaterial eine positive Elektrode und das zweite Elektrodenmaterial eine negative Elektrode umfasst.

10. Verfahren nach einem oder mehreren der Ansprüche 4 bis 9, wobei das erste Vliesmaterial und das zweite Vliesmaterial jeweils sowohl ein Batteriepapier als auch mindestens einen Abschnitt eines Batterieseparators umfassen und wobei die Materialien jeweils ein durchgehendes Material von der ersten Oberfläche des Vlieses in Kontakt mit der jeweiligen Elektrode bis zu einer äußeren Oberfläche gegenüber der ersten Oberfläche umfassen.

11. Verfahren nach einem oder mehreren der Ansprüche 4 bis 10, wobei das Verfahren ferner das Sättigen der ersten Zellhälfte und der zweiten Zellhälfte mit einem Elektrolytmaterial umfasst.

12. Verfahren nach einem oder mehreren der Ansprüche 4 bis 11, wobei das erste und das zweite Vliesmaterial eine Porosität von mehr als 90 % umfassen und eine Absorptionshöhe von mindestens etwa 5 cm gemäß ISO 8787-Normen aufweisen.

13. Verfahren nach einem oder mehreren der Ansprüche 4 bis 12, wobei die Batterie eine Blei-Säure-Batterie mit absorbierender Glasmatte umfasst.

## Revendications

1. Batterie au plomb comprenant:
(i) une première électrode;
(ii) une seconde électrode; et
(iii) deux paillets bi-fonctionnels,
où une première surface du chaque paillet bi-fonctionnel est en contact direct avec la première ou la seconde électrode, et où une seconde surface opposée à la première surface de chaque paillet bi-fonctionnel est en contact direct avec l'autre paillet bi-fonctionnel et la teneur de liant des matériaux non tissés étant le paillet bi-fonctionnel est entre 5 % en poids et 45 % en poids déterminée par ASTM D7348-13, comprenant de plus un matériau actif incorporé dans chaque paillet bi-fonctionnel et en contact avec une grille de la première ou de la seconde électrode et aucun séparateur discret n'est positionné entre les deux paillets bi-fonctionnels et chaque paillet bi-fonctionnel est **caractérisé par** une épaisseur supérieur à 0,38 mm (15 mils), le matériau actif ne s'étend pas complètement par l'un et l'autre paillet bi-fonctionnel pour entrer en contact avec l'autre paillet bi-fonctionnel.

2. Batterie au plomb selon la revendication 1, où chaque paillet bi-fonctionnel comprend un paillet continu de fibres de verre.

3. Batterie au plomb selon l'une ou plusieurs des revendications 1 ou 2, où chaque paillet bi-fonctionnel est **caractérisé par** une épaisseur supérieure à 0,51 mm (20 mils).

4. Procédé de production une cellule de batterie selon l'une ou plusieurs des revendications là 3, le procédé comprenant:
(i) positionner une première moitié de cellule incluant une première électrode dans un boîtier de batterie, la première moitié de cellule comprenant un premier matériau d'électrode et un premier matériau non tissé étant un paillet bi-fonctionnel et couplé avec une première grille d'électrode; et
(ii) positionner une seconde moitié de cellule incluant une seconde électrode dans le boîtier de batterie en proximité à et en contact avec la première moitié de cellule, la seconde moitié de cellule comprenant un second matériau d'électrode et un second matériau non tissé étant un paillet bi-fonctionnel et couplé avec une seconde grille d'électrode,
où le premier matériau non tissé s'étend de la première surface en proximité de la première électrode vers une seconde surface opposée à la première qui est en proximité du second matériau non tissé et la teneur de liant des matériaux non tissés est entre 5% en poids et 45% en poids déterminée par ASTM D7348-13, comprenant de plus un matériau actif incorporé dans chaque paillet bi-fonctionnel et en contact avec une grille de la première ou de la seconde électrode et le matériau actif ne s'étend pas complètement par l'un et l'autre paillet bi-fonctionnel pour entrer en contact avec l'autre paillet bi-fonctionnel, et chaque paillet bi-fonctionnel est **caractérisé par** une épaisseur supérieure à 0,38 mm (15 mils), ledit procédé ne comprend pas le positionnement d'un séparateur discret entre la première moitié de cellule et la seconde moitié de cellule.

5. Procédé selon la revendication 4, où le premier matériau non tissé comprend deux sections non tissées logées sur les côtés opposés de la première électrode.

6. Procédé selon la revendication 4, où le premier matériau non tissé et le second matériau non tissé sont de la même épaisseur.

7. Procédé selon l'une ou plusieurs des revendications 4 à 6, où le premier matériau d'électrode et le second matériau d'électrode comprennent un matériau en plomb ou un matériau d'oxyde de plomb.

8. Procédé selon l'une ou plusieurs des revendications 4 à 7, où l'épaisseur du premier matériau non tissé est entre 0,51 mm (20 mils) et 3,81 mm (150 mils) sous pression de 10 kPa.

9. Procédé selon l'une ou plusieurs des revendications 4 à 8, où la première électrode comprend une électrode positive, et la seconde électrode comprend une électrode négative.

10. Procédé selon l'une ou plusieurs des revendications 4 à 9, où le premier matériau non tissé et le second matériau non tissé comprend chacun à la fois un papier de collage de la batterie et au moins une partie d'un séparateur de batterie, et où les matériaux comprennent chacun un matériau continu de la première surface du non tissé en contact avec l'électrode respective à une surface extérieure opposée à la première surface.

11. Procédé selon l'une ou plusieurs des revendications 4 à 10, où le procédé comprend de plus la saturation de la première moitié de cellule et de la seconde moitié de cellule avec un matériau d'électrolyte.

12. Procédé selon l'une ou plusieurs des revendications 4 à 11, où les premier et second matériaux non tissés comprennent une porosité supérieure à 90 % et comprennent une hauteur d'absorption d'au moins 5 cm selon ISO 8787.

13. Procédé selon l'une ou plusieurs des revendications 4 à 12, où la batterie comprend une batterie au plomb à paillet de verre absorbé.
